# EUROPEAN PATENT SPECIFICATION

(11) **EP 1 977 132 B1**
(45) Date of publication and mention of the grant of the patent: **05.10.2011**
(21) Application number: 07704016.0
(22) Date of filing: 19.01.2007
(51) Int. Cl.: F16D 65/12, E05F 5/00

(54) **SUPPORT PIECE FOR BRAKING ELEMENT**
STÜTZTEIL FÜR BREMSELEMENT
PIECE DE SUPPORT D'ELEMENT DE FREINAGE

(30) Priority: 24.01.2006 IT TV20060006
(43) Date of publication of application: 08.10.2008
(73) Proprietor: NICE S.P.A., 31046 Oderzo (Treviso) (IT)
(72) Inventor: MALAUSA, Andrea, I-31047 Ponte di Piave (IT); GALBERTI, Lorenzo, I-30024 Musile di Piave (IT)
(74) Representative: Dragotti, Gianfranco
(86) International application number: PCT/EP2007/050546
(87) International publication number: WO 2007/085569

(56) References cited:
- EP-A- 1 582 681
- FR-A1- 2 594 920
- FR-A1- 2 728 945
- US-A- 3 724 612

## Description

The invention relates to a support piece for a friction braking element, in particular for actuating systems of roller shutters, sun awnings or the like.

Friction braking devices for actuating systems of roller shutters (to which, by way of example and for the sake of simplicity, reference will be made henceforth) are known, said devices being used to brake and/or slow down rotation of a roller due to the weight of the roller shutter which is wound around it. An example of these devices is described in the Italian Utility model 0000227599, where the end of a shaft of an electric motor is contained inside a cylindrical seat of a bush coaxial therewith and integral with a support piece for a braking element made of material with a high coefficient of friction.

The bush has two lateral through-openings which are diametrically opposite each other and which communicate with the cylindrical seat, while the end of the shaft has a diametral through-hole such that when this end is inserted inside the cylindrical seat of the bush, the hole and the openings may be aligned and receive a pin which is forced into the hole. The pin projects from the hole and engages inside the openings, allowing not only, by means of driving, transmission of the rotary movement between the shaft and the support piece, but also displacement of the support piece along the axis of the shaft, caused by the axial thrust of the pin against suitably shaped walls of the openings inside the bush.

The axial displacement of the support piece causes the braking element to make contact or not with a fixed surface. When the shaft is in movement, it causes rotation of the pin and the latter, acting on the shaped walls of the openings, moves the support piece and the braking element away from the fixed surface: the shaft may thus rotate freely. When, however, the shaft is at a standstill, a spring manages to push the support piece and the braking element against the fixed surface, blocking the latter and consequently the shaft and the roller shutter.

It is evident that the braking action of the system is dependent upon the friction generated by the contact between the braking element and the surface. The friction depends on the materials used and on the dimensions of the two contact surfaces. The braking materials generally used offer a high coefficient of friction and a high heat dissipation capacity, but are very fragile. In addition, it is necessary to mention the small space available, within the tubular motor, which does not permit the use of large-size braking elements. The small contact surface areas limit the braking action.

In order for the system to be efficient, the braking element must be rigidly joined to the support piece so that there is no relative slipping of the two parts, while the braking action must be located exclusively between the braking element and the fixed surface.

The abovementioned Utility Model No. 0000227599 does not describe any measure for locking the braking element on the support piece nor makes any reference to the problem: using a constructional solution such as that described there, the braking element slides on the support piece, with consequent wear and/or destruction of the support piece or the braking element.

In commercial actuating systems an improvement envisages that small pins are provided on the surface of the support piece and corresponding seats or holes are formed in the braking element in order to obtain a mutual locking action by means of forced engagement. The seats, which are often through-holes, reduce considerably the friction surface area of the braking element (with a reduced braking action) and create structurally weak zones where a large amount of tension is concentrated owing to the force exerted by the pins. Precisely in these zones cracks are formed and breakages occur during operation of the brake in high-power motors.

The object of the present invention is to provide a braking device which does not have the disadvantages of the prior art.

This object is achieved with a support piece having a surface for arranging a friction braking element, the surface being provided with locking means for locking the braking element, characterized in that the locking means are formed so as to retain the braking element at least along a section of its peripheral edge. The main characteristic feature of the device is the way in which locking of the braking element on the support piece is performed, said braking element being forced to rotate integrally with the support piece owing to the gripping action of locking means on at least one peripheral edge section (i.e. an outer or inner edge, if present) of the braking element.

With this solution it is possible to avoid weakening the braking element with holes or openings and maintain the maximum surface area to which a greater braking action corresponds. Since the braking element is not subject to internal stresses, it has a longer working life and is more reliable.

The advantages of a device according to the invention will in any case emerge clearly from the following description of a preferred embodiment which refers to the accompanying drawing where:
- Fig. 1 is an exploded view of part of an actuating system for roller shutters, comprising the device according to the invention;
- Fig. 2 is a view of the actuating system with the components of Fig. 1 assembled;
- Fig. 3 is a front view of a support piece according to the invention;
- Fig. 4 is a side view of the support piece shown in Fig. 3;
- Fig. 5 is a cross-sectional view along the plane A-A in Fig. 3;
- Fig. 6 is an axonometric view of the front of the support piece shown in Fig. 3;
- Fig. 7 is a front view of a variant of the support piece and the braking element not in accordance with the claims.

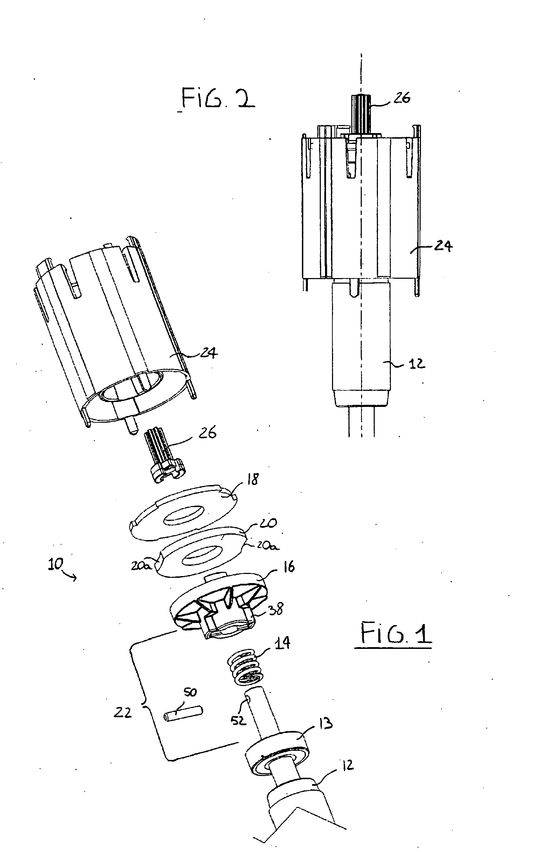

Fig. 1 shows the components of a device 10 according to the invention which are enclosed inside a tubular body (not shown) of an actuating system for roller shutters. These components are:
- a shaft 12 of an electric motor (not shown), coaxial with the tubular body and supported by suitable bearings 13, only one of which is shown;
- resilient means 14 (a spring here) which push a support piece 16 which carries an annular braking element 20 made of material with a high coefficient of friction, towards (the surface of) an engaging ring 18 made of the same material (for example brake lining material) and fixed on a cage 24 which is in turn enclosed inside the tubular body. The support piece 16 is slidable axially with respect to the shaft 12 between two positions: a first position where the braking element 20 is in contact with the engaging ring 18 and a second position where they are separated;
- motion transmission means 22 situated between the shaft 12 and the support piece 16, comprising a pin 50 inserted into a corresponding hole 52 of the shaft 12 so as to project at both ends by about the same amount. The overall function of the means 22 (which may be replaced by other functionally similar parts) is to separate the support piece 16 and the braking element 18 from the engaging ring 18 when the shaft 12 is rotating, keeping them instead in contact when the shaft 12 is stationary. The resilient means 14 press against the bearing 13 and a collar 38 of the support piece 16, so as to push the latter towards the engaging ring 18;
- a toothed transmission spindle 26 which is rigidly joined (integral) to the support piece 16 and which passes through the element 20, the engaging ring 18 and the cage 24, so as to interconnect kinematically with a reduction gear (not shown).

The device 10 operates in the following manner. When the electric motor (and therefore also the shaft 12) is stationary, the resilient means 14 push the support piece 16 and the braking element 20 against the engaging ring 18, preventing relative rotation of the latter two parts owing to mutual friction. The rotation of the spindle 26 connected to the support piece 16 is now locked. Since the spindle 26, via the reduction gear, is connected to the roller of the roller shutter, it keeps it stationary.

When the shaft 12 rotates, the pin 50 also rotates, acting inside the support piece 16 (on inclined surfaces 37 which convert the rotational movement into an axial displacement) and pushing it axially towards the resilient means 14, overcoming its resistive force. The result is that the element 20 moves away from the ring 18 over a certain distance, allowing the rotation of the support piece 16, the spindle 26 and therefore the roller shutter. Clearly the displacing action of the support piece 16 and the braking element 20 occurs in both directions of rotation of the shaft 12.

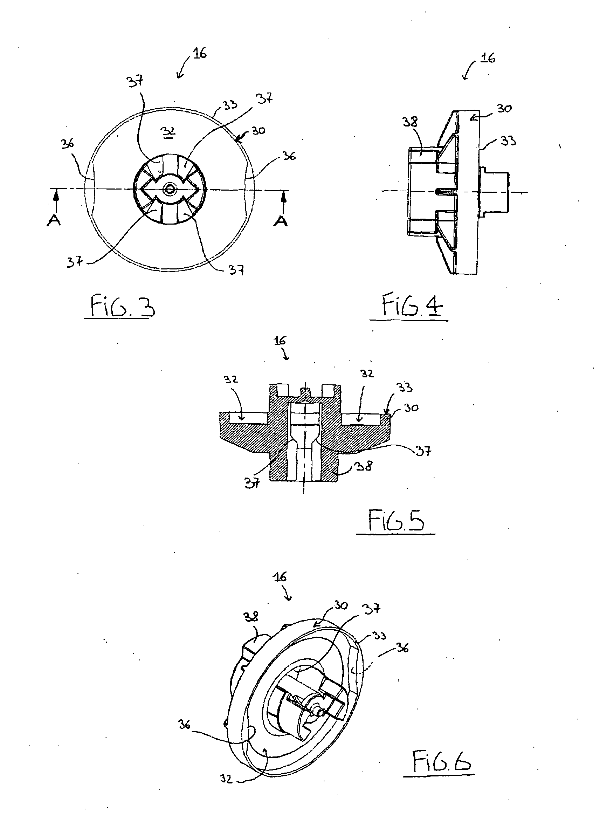

Figures 3 to 6 show the structure of the support piece 16. It comprises a circular retaining disc 30 having, formed on its surface, a seat 32 with an edge 33 inside which a base of the braking element 20 may be positioned, keeping it projecting from the support piece 16. The edge 33 defines the seat 32 which has a substantially annular shape, except - along a diameter - for two convex zones 36 which are directed towards the centre of the disc 30.

As can be seen from Fig. 1, the braking element 20 has a shape corresponding to the seat 32 and may be inserted perfectly inside it without slipping, owing to the interference of the convex zones 36 with matching concave zones 20a in the element 20.

In respect of the above it is clear that the invention avoids weakening the braking element 20 with holes or openings and ensures that its maximum braking surface area is maintained, since the edge 33 retains the braking element 20 along the whole of its peripheral edge (in this case the external perimeter). Clearly it may be sufficient to retain the braking element along only part of its peripheral edge. Examples of variants of the invention, however not covered by the appended claims, are described below. Such variants may envisage that the edge 33 may have, formed therein, recesses different from the convex zones 36, with a varying number and shape, not necessarily arranged along the edge 33, for example forming a polygonal seat (and a polygonal braking element). An alternative solution is to envisage a (circular) seat without an irregular form, the friction and gripping of the edge 33 being sufficient to keep the element 20 fixed, or to use adhesive substances in order to obtain locking thereof.

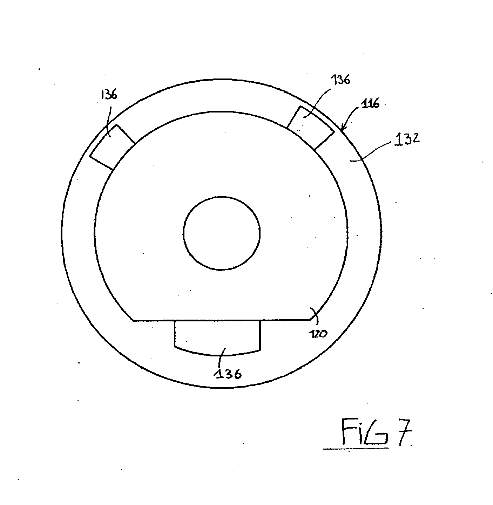

Instead of providing a seat in the support piece 16 negatively formed, it is possible to form one with projections - see Fig. 7. For example, it would be sufficient to form on a flat surface 132 of a support piece 116 - corresponding to the bottom of the seat 32 of the previous solution - a number of reliefs 136 in a position and with a form in plan view similar to the convex zones 36, thereby eliminating the edge 33. The rotational locking action of the support piece 116 on a braking element 120 situated between the reliefs 136 remains unchanged. Other types of relief, in terms of number and shape, are possible provided that, once the braking element is situated inside the seat defined by the projections, interference and/or friction prevents relative rotation thereof with the support piece underneath and it projects by a sufficient amount to make contact with an engaging ring (or surface).

Advantageous results are obtained by forming projections - as shown in Fig. 7 - along a circumference cut by a (preferably not diametral) chord. The projections may have the form, therefore, of circle segments. With a braking element 120 of corresponding shape (a circle with one or more missing circle segments, on the outside or not of a diametral chord) it is ensured that it does not slip on the support piece 116. In the case of the element 20, the missing circle segments have a curvilinear base 20a. In this case also a circular arrangement of the projections (along a circular braking element) which retain the support piece by means of pressure and/or by means of friction, but not by means of interference, may be sufficient.

In the case of a braking element with a central hole, the (peripheral) edge of the central (circular or non-circular) hole may also be used as a locking surface for the locking means.

## Claims

1. Actuating system for roller shutters or sun awning comprising a braking device , comprising
a support piece (16),
a friction braking element (20), and
an engaging ring (18),
said support piece (16) having a seat (32) from which the braking element (20) projects, the support piece (16) being displaceable between
a first position where the braking element (20) is in surface contact with engaging ring (18) and
a second position where they are separated;
said braking element (20) and support piece (16) being provided with locking means (36) to retain the braking element (20) locked to the support piece (16),
**characterized in that** said locking means consist
on said support piece (16) of one or more convex zones (36) of an edge (33) of the seat (32) surrounding the entire outer perimeter of the braking element (20), said convex zones (36) being directed towards the centre of the support (16), and
on said braking element (20) of one or more concave zones (20a) matching said convex zones (36).

2. Actuating system according to claim 1, **characterized in that** the edge (33) of the seat (32) is substantially circular.

3. Actuating system according to any preceding claim, **characterized in that** the braking element has essentially the form of a circle with one or more missing circle segments.

4. Actuating system according to the preceding claim, **characterized in that** the missing circle segments of the braking element have a curvilinear base (20a).

5. Actuating system according to claim 3 or 4, **characterized in that** the braking element has a central hole.

## Patentansprüche

1. Antriebssystem für Rollläden oder Sonnenschutzdächer, aufweisend eine Bremsvorrichtung, welche Folgendes aufweist:
ein Stützteil (16),
ein Reibungsbremselement (20) und
einen Kupplungsring (18),
wobei das Stützteil (16) einen Sitz (32) aufweist, aus dem das Bremselement (20) vorsteht, das Stützteil (16) zwischen einer ersten Position, in der das Bremselement (20) in Oberflächenkontakt mit dem Kupplungsring (18) ist, und einer zweiten Position, in der sie getrennt sind, versetzbar ist;
wobei das Bremselement (20) und das Stützteil (16) mit Arretierungsmitteln (36) versehen sind, um das Bremselement (20) am Stützteil (16) arretiert zu halten,
**dadurch gekennzeichnet, dass** die Arretierungsmittel
auf dem Stützteil (16) aus einer oder mehreren konvexen Zonen (36) einer Kante (33) des Sitzes (32), welche den gesamten äußeren Umfang des Bremselements (20) umgibt, wobei die konvexen Zonen (36) gegen das Zentrum des Stützteils (16) gerichtet sind, und
auf dem Bremselement (20) aus zwei oder mehreren konkaven Zonen (20a), welche den konvexen Zonen (36) entsprechen, bestehen.

2. Antriebssystem nach Anspruch 1, **dadurch gekennzeichnet, dass** die Kante (33) des Sitzes (32) im Wesentlichen kreisförmig ist.

3. Antriebssystem einem der vorstehenden Ansprüche, **dadurch gekennzeichnet, dass** das Bremselement im Wesentlichen die Form eines Kreises mit einem oder mehreren fehlenden Kreissegmenten aufweist.

4. Antriebssystem nach einem der vorstehenden Ansprüche, **dadurch gekennzeichnet, dass** die fehlende Kreissegmente des Bremselements eine gekrümmte Basis (20a) aufweisen.

5. Antriebssystem nach Anspruch 3 oder 4, **dadurch gekennzeichnet, dass** das Bremselement ein zentrales Loch aufweist.

## Revendications

1. Système d'actionnement pour volets roulants ou store à l'italienne comprenant un système de freinage, comprenant :
une pièce de support (16),
un élément de freinage par friction (20), et
une bague de mise en prise (18),
ladite pièce de support (16) ayant un siège (32) duquel l'élément de freinage (20) fait saillie,
la pièce de support (16) étant déplaçable entre :
une première position dans laquelle l'élément de freinage (20) est en contact de surface avec la bague de mise en prise (18), et
une deuxième position dans laquelle ils sont séparés ;
ledit élément de freinage (20) et la pièce de support (16) étant prévus avec des moyens de blocage (36) afin de retenir l'élément de freinage (20) bloqué sur la pièce de support (16),
**caractérisé en ce que** lesdits moyens de blocage se composent,
sur ladite pièce de support (16), d'une ou de plusieurs zones convexes (36) d'un bord (33) de siège (32) entourant la totalité du périmètre externe de l'élément de freinage (20), lesdites zones convexes (36) étant dirigées vers le centre de support (16), et
sur ledit élément de freinage (20), d'une ou de plusieurs zones concaves (20a) correspondant auxdites zones convexes (36).

2. Système d'actionnement selon la revendication 1, **caractérisé en ce que** le bord (33) de siège (32) est sensiblement circulaire.

3. Système d'actionnement selon l'une quelconque des revendications précédentes, **caractérisé en ce que** l'élément de freinage a essentiellement la forme d'un cercle avec un ou plusieurs segments de cercle manquants.

4. Système d'actionnement selon la revendication précédente, **caractérisé en ce que** les segments de cercle manquants de l'élément de freinage ont une base curviligne (20a).

5. Système d'actionnement selon la revendication 3 ou 4, **caractérisé en ce que** l'élément de freinage a un trou central.
